# EUROPÄISCHE PATENTANMELDUNG

(11) **EP 1 033 802 A2**
(43) Veröffentlichungstag der Anmeldung: **06.09.2000**
(21) Anmeldenummer: 00810153.7
(22) Anmeldetag: 23.02.2000
(51) Int. Cl.: H02G 3/20, F21V 23/06

(54) **Beleuchtungseinrichtung und Verfahren zu deren Montage**

(30) Priorität: 01.03.1999 CH 36499
(71) Anmelder: Arson AG, 9500 Will (CH)
(72) Erfinder: Edelmann, Roger, 9500 Wil (CH)
(74) Vertreter: Wenger, René

(57) **Zusammenfassung**

Eine Leuchtkörperfassung (9) besteht aus einem Aufnahmekörper (3) mit einer Befestigungsseite (13) und mit einer Leuchtkörperseite (14), die eine Aufnahmeöffnung (2) zur Aufnahme eines elektrischen Leuchtkörpers (11) aufweist. Die Aufnahmeöffnung ist anstelle des Leuchtkörpers (11) mit einer entfernbaren Schutzvorrichtung (4) verschlossen. Bei der Montage wird der Aufnahmekörper weitgehend in eine Putzschicht (10) integriert, wobei die Schutzvorrichtung eine Verschmutzung verhindert und das Wiederauffinden der Aufnahmeöffnungen (2) erleichtert.

## Beschreibung

Die Erfindung betrifft eine Beleuchtungseinrichtung gemäss dem Oberbegriff von Anspruch 1. Derartige Beleuchtungseinrichtungen werden vor allem an Decken montiert für die Herstellung sogenannter Sternenhimmel. Darunter wird eine Vielzahl von Leuchtkörpern verstanden, die in einem regelmässigen oder unregelmässigen Muster angeordnet sind.

Bei der Erstellung derartiger Sternenhimmel besteht ein grosses Problem darin, dass aufgrund der nötigen Einbautiefe für die Leuchten und für andere für den Betrieb notwendigen Komponenten aufwendige Vorkehrungen getroffen werden müssen. So ist es beispielsweise erforderlich, dass zahlreiche Ausnehmungen bzw. Leerdosen im Rohbau eingelassen oder nachträglich ausgespitzt werden müssen. Diese Lösung hat den Nachteil, dass die Decke statisch geschwächt wird. Ausserdem müssen die Leerdosen bei einem Neubau bereits in einem sehr frühen Baustadium versetzt werden. Als weitere Variante kann die Decke abgehängt werden, wobei die Instalationen im Zwischenraum untergebracht werden. Dabei wird jedoch die nutzbare Innenraumhöhe reduziert und insgesamt werden die Baukosten erhöht. In jedem Fall übersteigt es oftmals die Vorstellungskraft der Bauherrschaft, wie das Resultat schlussendlich aussehen wird, weil es kaum Möglichkeiten für eine provisorische Montage gibt.

Es ist daher eine Aufgabe der Erfindung, eine Beleuchtungseinrichtung der Eingangs genannten Art zu schaffen, die sich besonders einfach und kostengünstig montieren lässt. Die Platzierung soll dabei erst nach Rohbauvollendung erfolgen, sodass Änderungswünsche der Bauherrschaft noch berücksichtigt werden können. Die Montage soll direkt auf einen weitgehend unvorbereiteten Untergrund erfolgen und die endgültige Fertigstellung der Decke soll durch die Leuchtkörperfassung nach Möglichkeit nicht beeinträchtigt werden. Sekundärkonstruktionen wie z.B. Deckenabhängungen sollen dabei ganz wegfallen.

Diese Aufgabe wird erfindungsgemäss mit einer Beleuchtungsvorrichtung gelöst, welche die Merkmale im Anspruch 1 aufweist. Die entfernbare Schutzvorrichtung ermöglicht auf besonders einfache Weise, dass die gesamte Leuchtkörperfassung bereits am Rohbau platziert oder gegebenenfalls noch umplatziert werden kann, bevor die Fertigstellung erfolgt. Die empfindliche Aufnahmeöffnung, bei der es sich um eine Steckfassung, um eine Bajonettefassung oder um eine Gewindefassung handeln kann, wird nicht beschädigt oder verunreinigt.

Besonders vorteilhaft weist die Schutzvorrichtung eine vorzugsweise flexible Lasche auf, welche sich im Bereich der Aufnahmeöffnung über die Ebene der Leuchtkörperseite hinaus erstreckt. Diese Lasche ermöglicht nicht nur eine leichte Handhabung der Schutzvorrichtung, sondern sie erfüllt auch noch eine Signalfunktion, weil später jederzeit leicht erkennbar ist, wo ein Leuchtkörper eingesetzt werden muss. Die flexible Ausbildung ermöglicht ein problemloses überfahren mit einem Pinsel, einem Spachtel oder einem anderen Werkzeug, ohne dass der Arbeitsprozess dabei wesentlich beeinträchtigt wird.

Sehr günstig wirkt es sich ausserdem aus, wenn die Distanz zwischen der Befestigungsseite und der Leuchtkörperseite maximal 10 mm beträgt. Bei einer derartigen Dimensionierung kann die Leuchtkörperfassung praktisch in herkömmliche Putzschichten eingelassen werden. Damit die Leuchtkörperfassung dabei einen nachhaltigen Verbund mit dem Umgebungsmaterial bildet, ist es vorteilhaft, wenn der Aufnahmekörper massiv und vorzugsweise aus einem gleichartigen Material wie der ihn umgebende Putz hergestellt ist. Der Aufnahmekörper kann dabei als Gussteil oder Pressteil ausgebildet sein, wobei ein zur Aufnahmeöffnung führender Stromabnehmer ganz oder teilweise eingegossen oder eingepresst ist.

Weitere Montagevorteile ergeben sich, wenn die Leuchtkörperfassung mittels einer Schnappverbindung an eine elektrische Versorgungsleitung anschliessbar ist. Diese Leitungen können beispielsweise in einem bestimmten Raster verlegt werden, der eine möglichst flexible Montage der Leuchtkörperfassung ermöglicht.

Die Befestigung der Leuchtkörperfassung kann dadurch erleichtert werden, dass auf der Befestigungsseite ein Klebstoff angeordnet ist. Dabei kann es sich beispielsweise um eine Klebstoffschicht handeln, die mit einer Schutzfolie abgedeckt ist. Die Schutzfolie wird für die Montage abgezogen und der Aufnahmekörper wird gegen den Trägerabschnitt gepresst.

Aber auch auf der Leuchtkörperseite kann flächig oder punktförmig ein Klebstoff angeordnet sein, der die Fixierung der Schutzvorrichtung verbessert. Nach dem Entfernen der Schutzvorrichtung dient diese Klebstoffschicht der Fixierung des Leuchtkörpers oder eines optischen Hilfsmittels, wie z.B. eines Reflektors oder eines Diffusors. In bestimmten Fällen wäre es auch denkbar lediglich Dekorelemente in die Aufnahmeöffnungen einzusetzen, welche ebenfalls durch die Klebstoffschicht fixiert werden.

Der Aufnahmekörper ist vorteilhaft als Steckfassung für eine Leuchtdiode ausgebildet.

Der Aufnahmekörper ist vorteilhaft derart im Trägerabschnitt versenkt, dass die Leuchtkörperseite etwa mit der Ebene des Trägerabschnitts fluchtet. Der Trägerabschnitt kann dabei eine Trägerschicht, beispielsweise eine Betondecke aufweisen, die im Rohbau erstellt wird. Auf die Trägerschicht ist eine Deckschicht, insbesondere eine Putzschicht aufgetragen, wobei die Dicke der Putzschicht etwa der Distanz zwischen der Befestigungsseite und der Leuchtkörperseite entspricht. Trotz der bereits angebrachten Leuchtkörperfassungen kann die Putzschicht mühelos und grossflächig aufgetragen werden.

Die Erfindung betrifft auch ein Verfahren zum Montieren einer Beleuchtungseinrichtung mit den Merkmalen im Anspruch 11. Verglichen mit konventionellen Systemen wird dabei die Montage einfacher und besser in den Bauablauf integriert. Leuchtkörper und Stromkabel können nach Rohbauerstellung auf den Untergrund aufgebracht, beispielsweise aufgeklebt werden. Die elektrische Verbindung zwischen dem Stromkabel und der Leuchtkörperfassung wird vorteilhaft mechanisch, beispielsweise durch eine Schnappverbindung hergestellt und sie kann sowohl seriell, als auch parallel erfolgen.

Danach wird der Putz aufgetragen. Die Schutzvorrichtung verhindert dabei eine Verschmutzung der Leuchkörperfassung bzw. der Aufnahmeöffnung. Als nächstes wird der Putz gestrichen oder abgerieben und nach Fertigstellung wird die Schutzvorrichtung entfernt und der Leuchtkörper eingesteckt. Die Verwendung von Leuchtkörpern mit geringer Wärmeerzeugung wie z.B. Leuchtdioden ist dabei vorteilhaft.

Ausführungsbeispiele der Erfindung sind in den Zeichnungen dargestellt und werden nachstehend genauer beschrieben. Es zeigen:
- Figur 1: eine Draufsicht auf eine erfindungsgemässe Beleuchtungseinrichtung mit seitlicher Stromführung,
- Figur 2: ein Querschnitt durch die Beleuchtungseinrichtung durch die Ebene I-I gemäss Figur 1,
- Figur 3: eine Draufsicht auf ein alternatives Ausführungsbeispiel einer Beleuchtungseinrichtung mit zentraler Stromführung,
- Figur 4: ein Querschnitt durch die Ebene II-II der Beleuchtungseinrichtung gemäss Figur 3,
- Figur 5: eine Beleuchtungseinrichtung nach der Befestigung an einer Betondecke,
- Figur 6: die Beleuchtungseinrichtung gemäss Figur 5 nach dem Aufbringen einer Putzschicht und
- Figur 7: die Beleuchtungseinrichtung gemäss Figur 6 nach dem Einsetzen des Leuchtkörpers.

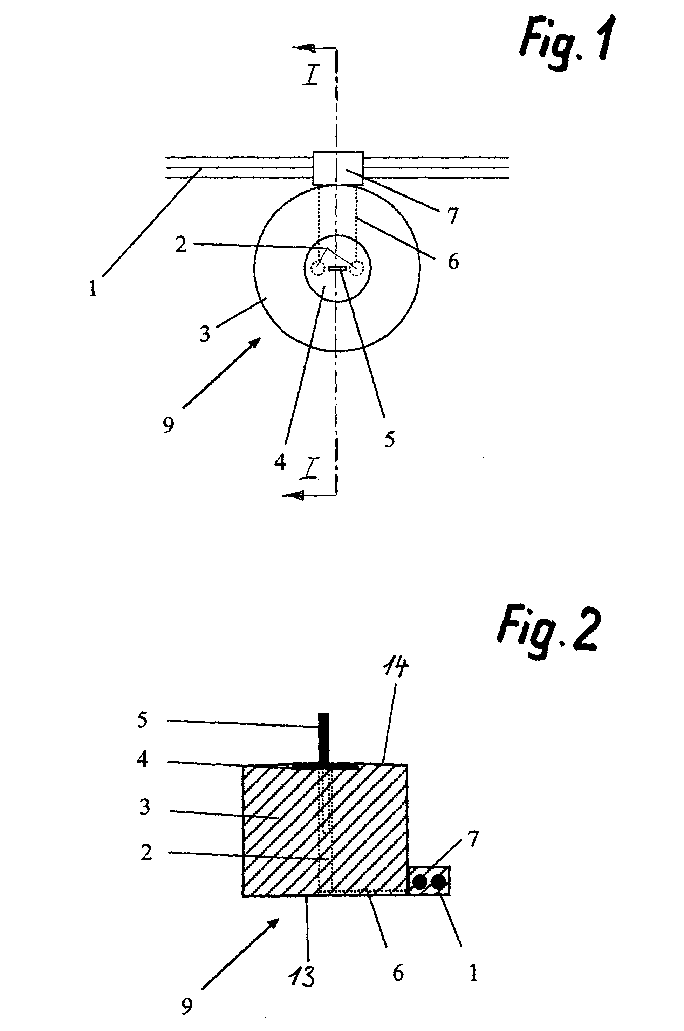

Wie aus den Figuren 1 und 2 ersichtlich ist, besteht eine gesamthaft mit 9 bezeichnete Leuchtkörperfassung im wesentlichen aus einem etwa zylindrischen Aufnahmekörper 3, der beispielsweise als Guss- oder Pressteil aus einem mineralischen Material hergestellt sein kann. Damit ist eine besonders intensive Verbindung mit der später angebrachten Putzschicht gewährleistet. Der Aufnahmekörper kann aber auch aus Kunststoffmaterial oder in bestimmten Fällen aus Metall gefertigt sein, wobei dann eine Isolation gegenüber den stromführenden Teilen gewährleistet sein muss.

Der Aufnahmekörper 3 hat eine vorzugsweise plane Befestigungsseite 13 und eine ebenfalls vorzugsweise plane und im Abstand dazu angeordnete Leuchtkörperseite 14. Es wäre aber ohne weiteres denkbar, dass insbesondere die Leuchtkörperseite leicht konvex gewölbt sein könnte. In der Leuchtkörperseite ist eine Aufnahmeöffnung 2 angeordnet, die dazu dient, später den Leuchtkörper aufzunehmen. Die Stromversorgung erfolgt dabei über elektrische Leiter 6, die eingegossen oder eingepresst sein können.

Die eigentliche Stromabnahme von einem Stromkabel 1 erfolgt über einen Stromabnehmer 7 der beim vorliegenden Ausführungsbeispiel seitlich am Aufnahmekörper 3 angeordnet ist. Der Stromabnehmer ist dabei vorzugsweise als Klipp ausgebildet, sodass keinerlei Klemmen oder dergleichen verschraubt werden müssen.

In die Aufnahmeöffnung 2 ist eine Schutzvorrichtung 4 beispielsweise aus Kunststoffmaterial eingesteckt. Die Schutzvorrichtung kann dabei eine kragenartige Erweiterung aufweisen, welche die eigentliche Aufnahmeöffnung überlappt. Im Bereich der Aufnahmeöffnung ist eine Lasche 5 angeordnet, welche sich in einer bestimmten Distanz über die Ebene der Leuchtkörperseite 14 erstreckt. Diese Lasche dient als Griffstück und als Markierung für das spätere Wiederauffinden der Aufnahmeöffnung.

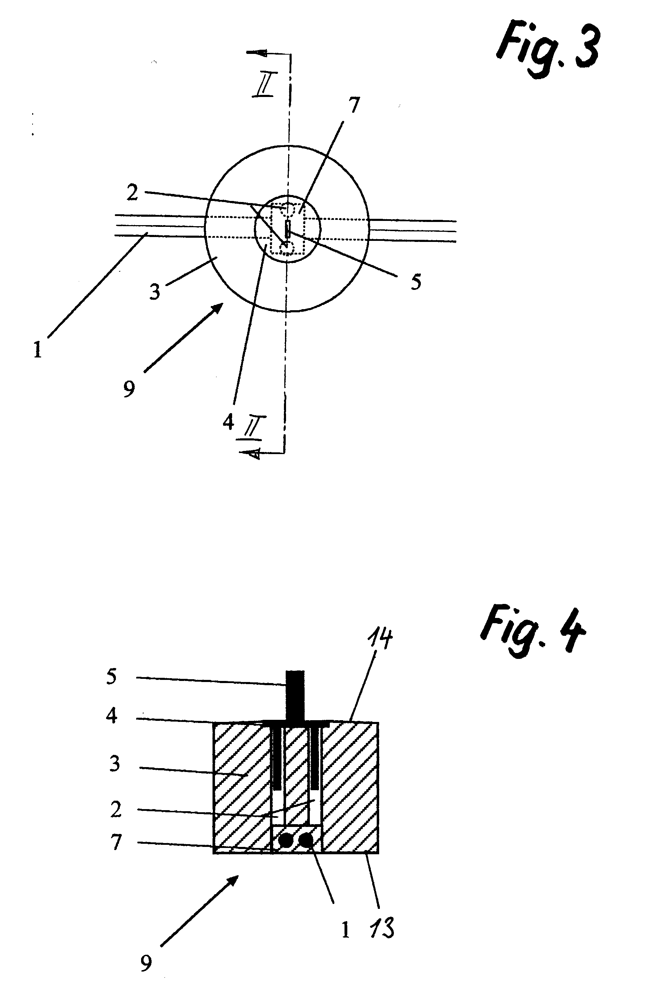

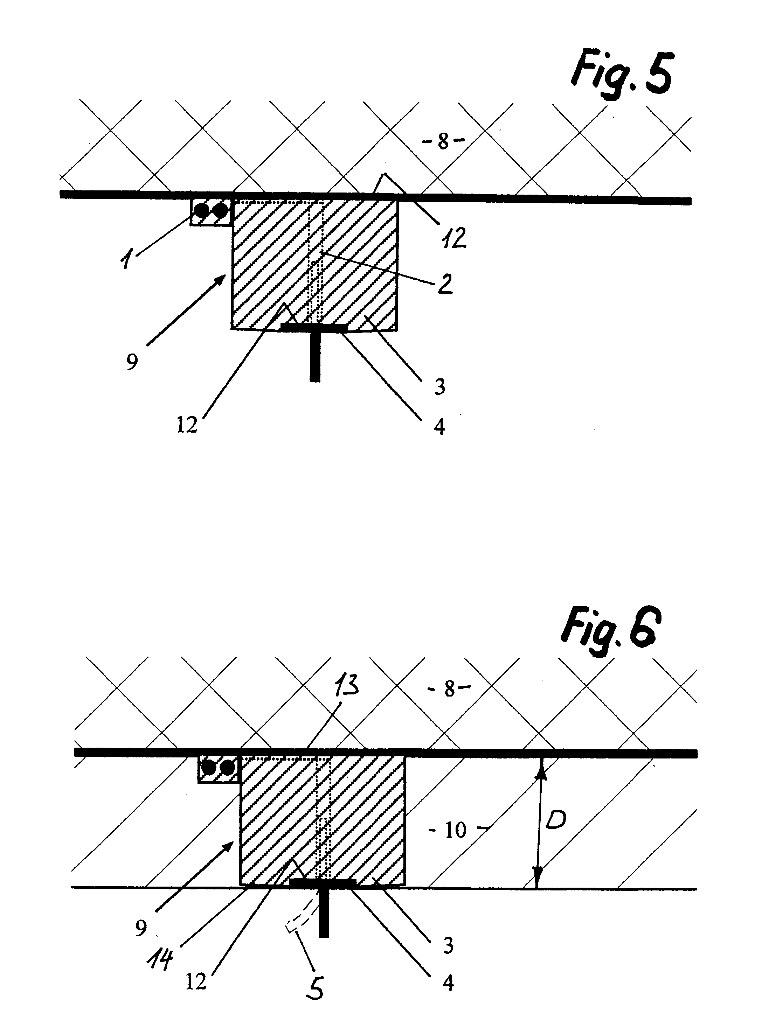

Die Beleuchtungseinrichtung gemäss den Figur 3 und 4 ist ähnlich aufgebaut wie diejenige gemäss den Figur 1 und 2. Der einzige Unterschied besteht darin, dass das Stromkabel 1 auf der Befestigungsseite 13 durch das Zentrum des Aufnahmekörpers 3 verläuft. Dementsprechend ist der Stromabnehmer 7 in den Aufnahmekörper integriert.

Anhand der Figur 5 bis 7 wird nochmals kurz die Montage einer Beleuchtungseinrichtung auf einer Betondecke 8 erläutert. Zu diesem Zweck werden zuerst die Leuchtkörperfassungen 9 an der Betondecke befestigt. Anschliessend erfolgt die Verlegung der Stromkabel 1 bzw. deren Anklipsen an die Leuchtkörperfassungen. Die Befestigung wird durch eine bereits vorhandene Klebstoffschicht 12 auf der Befestigungsseite erleichtert. Bereits bei diesem Arbeitsvorgang schützt die Schutzvorrichtung 4 die Aufnahmeöffnung vor Beschädigung und Verschmutzung. Eine Umplatzierung der einzelnen Leuchtkörperfassungen 9 ist in diesem Stadium immer noch möglich.

Steht die definitive Anordnung der Leuchtkörperfassungen einmal fest, erfolgt das Anbringen einer Putzschicht beispielsweise aus Weissputz 10. Wie angedeutet, kann die Lasche 5 dabei abgebogen werden, sodass der Arbeitsvorgang nicht beeinträchtigt wird. Die Laschen richten sich aufgrund ihrer Flexibilität jeweils wieder auf. Die Dicke D der Putzschicht entspricht etwa der Distanz zwischen der Befestigungsseite 13 und der Leuchtkörperseite 14. Auch auf der Leuchtkörperseite 14 kann dabei ein Klebstoff 12 aufgetragen sein, der eine bessere Haftung der Schutzvorrichtung 4 gewährleistet.

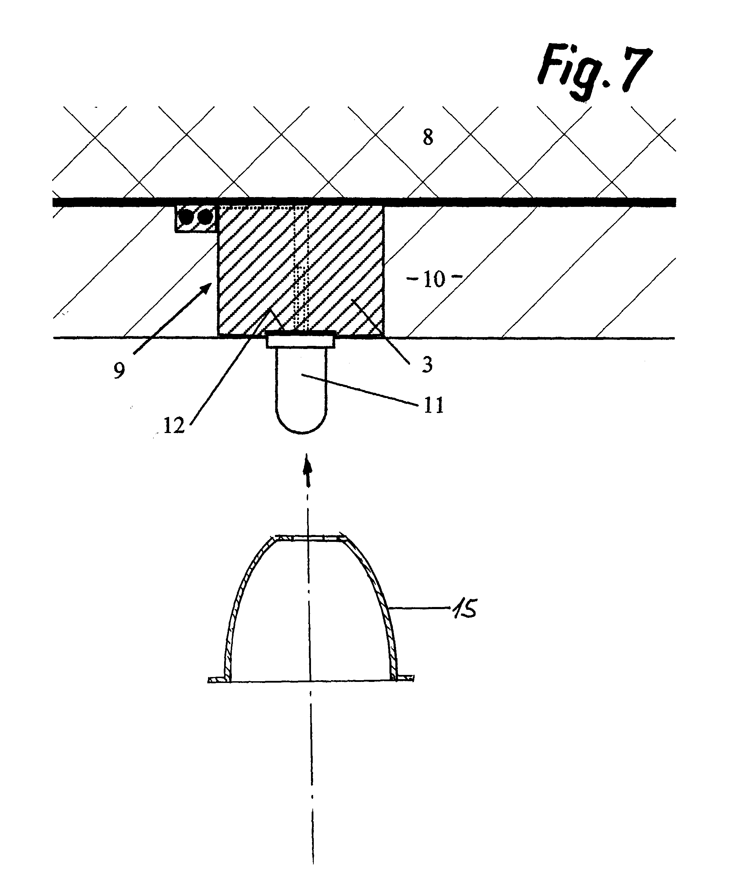

Nach der endgültigen Fertigstellung der Putzschicht wird gemäss Figur 7 die Schutzvorrichtung 4 gegen den eigentlichen Leuchtkörper 11 ausgetauscht. Die Lasche erleichtert dabei ein Auffinden der Aufnahmeöffnungen 2 selbst dann, wenn die Aufnahmekörper 3 mit einer dünnen Putzschicht bedeckt sind. Zusätzlich zum Leuchtkörper 11 können auch andere optische Komponenten, wie z.B. ein Reflektor 15 eingesetzt werden.

Selbstverständlich ist eine derartige Montage von Beleuchtungseinrichtungen nicht auf Decken beschränkt. Auch an Wandabschnitten gleichgültig ob eben oder gekrümmt erfolgt die Montage auf die gleiche Weise. Anstelle von Weissputz könnten auch andere Deckschichten beispielsweise aus Kunststoffmaterial treten.

## Patentansprüche

1. Beleuchtungseinrichtung mit wenigstens einer Leuchtkörperfassung (9), bestehend aus einem Aufnahmekörper (3) mit einer Befestigungsseite (13) zum Befestigen der Leuchtkörperfassung auf einem Trägerabschnitt (8/10) und mit einer im Abstand zur Befestigungsseite angeordneten Leuchtkörperseite (14), die eine Aufnahmeöffnung (2) zur Aufnahme eines elektrischen Leuchtkörpers (11) aufweist, dadurch gekennzeichnet, dass die Aufnahmeöffnung (2) anstelle des Leuchtkörpers mit einer entfernbaren Schutzvorrichtung (4) verschlossen ist.

2. Beleuchtungseinrichtung nach Anspruch 1, dadurch gekennzeichnet, dass die Schutzvorrichtung (4) eine vorzugsweise flexible Lasche (5) aufweist, welche sich im Bereich der Aufnahmeöffnung (2) über die Ebene der Leuchtkörperseite (14) hinaus erstreckt.

3. Beleuchtungseinrichtung nach Anspruch 1 oder 2, dadurch gekennzeichnet, dass die Distanz (D) zwischen der Befestigungsseite und der Leuchtkörperseite max. 10 mm beträgt.

4. Beleuchtungseinrichtung nach einem der Ansprüche 1 bis 3, dadurch gekennzeichnet, dass der Aufnahmekörper (3) als Gussteil oder Pressteil ausgebildet ist und dass ein zur Aufnahmeöffnung (2) führender Stromabnehmer (7) ganz oder teilweise eingegossen oder eingepresst ist.

5. Beleuchtungseinrichtung nach einem der Ansprüche 1 bis 4, dadurch gekennzeichnet, dass die Leuchtkörperfassung (9) mittels einer Schnappverbindung an eine elektrische Versorgungsleitung (1) anschliessbar ist.

6. Beleuchtungseinrichtung nach einem der Ansprüche 1 bis 5, dadurch gekennzeichnet, dass die Leuchtkörperfasssung (9) durch einen auf der Befestigungsseite (13) angeordneten Klebstoff mit einem Trägerabschnitt (8) verbindbar ist.

7. Beleuchtungseinrichtung nach einem der Ansprüche 1 bis 5, dadurch gekennzeichnet, dass die Leuchtkörperseite (14) zur Sicherung der Schutzvorrichtung und oder eines optischen Hilfsmittels und/oder eines Dekorelements mit einem Klebstoff versehen ist.

8. Beleuchtungseinrichtung nach einem der Ansprüche 1 bis 6, dadurch gekennzeichnet, dass der Aufnahmekörper (3) als Steckfassung für eine Leuchtdiode (LED) ausgebildet ist.

9. Trägerabschnitt, insbesondere Decken- oder Wandabschnitt mit wenigstens einer Beleuchtungseinrichtung nach einem der Ansprüche 1 bis 8, dadurch gekennzeichnet, dass der Aufnahmekörper (3) derart im Trägerabschnitt versenkt ist, dass die Leuchtkörperseite (14) etwa mit der Ebene des Trägerabschnitts fluchtet.

10. Trägerabschnitt nach Anspruch 9, dadurch gekennzeichnet, dass er eine Trägerschicht (8) aufweist, auf der eine Deckschicht (9), insbesondere Putzschicht aufgetragen ist, wobei die Dicke der Deckschicht etwa der Distanz (D) zwischen der Befestigungsseite (13) und der Leuchtköperseite (14) entspricht.

11. Verfahren zum Montieren einer Beleuchtungseinrichtung mit wenigstens einer Leuchtkörperfassung (9) auf einem Trägerabschnitt, insbesondere auf einem Decken- oder Wandabschnitt, wobei die Leuchtkörperfassung einen Aufnahmekörper (3) mit einer Befestigungsseite (13) und mit einer im Abstand zur Befestigungsseite angeordneten Leuchtkörperseite (14) aufweist und wobei in der Leuchtkörperseite eine Aufnahmeöffnung (2) zur Aufnahme eines elektrischen Leuchtkörpers (11) angeordnet ist, dadurch gekennzeichnet,
- dass der Aufnahmekörper (3) an der Befestigungsseite (13) auf einer Trägerschicht (8) des Trägerabschnitts befestigt wird, wobei gegebenenfalls die Leuchtkörperfassung mit einer elektrischen Versorgungsleitung (1) verbunden wird,
- dass die Aufnahmeöffnung (2) vor oder nach der Befestigung des Aufnahmekörpers mit einer entfernbaren Schutzvorrichtung (4) verschlossen wird,
- dass eine Deckschicht (10), insbesondere eine Putzschicht auf die Trägerschicht (8) aufgetragen wird,
- und dass nach der Fertigstellung der Deckschicht die Schutzvorrichtung entfernt und gegen einen Leuchtkörper (11) ersetzt wird.

12. Verfahren nach Anspruch 11, dadurch gekennzeichnet, dass die Deckschicht in einer Dicke aufgetragen wird, dass sie mit der Leuchtkörperseite (14) fluchtet oder diese gerade bedeckt.
